# NEUE EUROPÄISCHE PATENTSCHRIFT

(11) **EP 2 314 412 B2**
(45) Veröffentlichungstag und Bekanntmachung des Hinweises auf die Entscheidung über den Einspruch: **07.09.2022**
(45) Hinweis auf die Patenterteilung: 19.12.2018
(21) Anmeldenummer: 10188598.6
(22) Anmeldetag: 22.10.2010
(51) Int. Cl.: B23K 26/36, B23K 26/08

(54) **Laserbearbeitungsvorrichtung und Verfahren zur Herstellung einer Fläche an einem Rohling**
Laser machining apparatus and method for forming a surface on an unfinished product
Dispositif de traitement au laser et procédé de fabrication d'une surface sur une ébauche

(30) Priorität: 22.10.2009 DE 102009044316
(43) Veröffentlichungstag der Anmeldung: 27.04.2011
(73) Patentinhaber: Fritz Studer AG, 3612 Steffisburg (CH)
(72) Erfinder: Brunner, Gerhard, 4614 Hägendorf (CH); Hunziker, Urs, 4923 Wynau (CH); Friederich, Roland, 4934 Madiswil (CH); Mushardt, Heinrich, 21039 Börnsen (DE)
(74) Vertreter: Rüger Abel Patentanwälte PartGmbB

(56) Entgegenhaltungen:
- WO-A1-2005/044505
- DE-A1- 19 860 585
- DE-A1- 19 860 585
- DE-A1-102006 005 401
- DE-A1-102007 012 816

## Beschreibung

Die Erfindung betrifft eine Laserbearbeitungsvorrichtung sowie ein Verfahren zur Herstellung einer Fläche an einem Rohling. Insbesondere sollen an dem Rohling eine oder mehrere Schneidkanten, Spanflächen und Freiflächen gebildet werden. Die herzustellende Fläche kann beispielsweise eine Span- oder Freifläche sein. Bei der Herstellung der Fläche kann gleichzeitig die Kante, insbesondere Schneidkante gebildet werden. Auf diese Weise kann aus dem Rohling ein Schneidwerkzeug hergestellt werden. Der Rohling kann auch aus mehrere Materialschichten oder aus mehreren aneinander gefügten Elementen aufgebaut sein.

Zur Bearbeitung solcher Rohlinge sind verschiedene Abtragungsverfahren bekannt, z.B. Schleifen. Das Schleifen von sehr harten Werkstoffen, wie etwa polykristalliner Diamant (PKD) oder CVD-Diamant (Chemical Vapor Deposition) stößt allerdings sowohl technisch als auch wirtschaftlich gesehen an seine Grenzen. Die Laserablation mit Hilfe von kurzgepulsten Lasern bietet neue Möglichkeiten diese Werkstoffe wirtschaftlich zu bearbeiten, um beispielsweise Werkzeuge herzustellen.

Die Erzeugung qualitativ hochwertiger Schneidkanten wirft allerdings Probleme auf. Nach dem heutigen Stand der Technik sind Lasersysteme bekannt, welche die Werkstückkontur mit Hilfe eines Laserscanners abfahren, wobei der Rohling gegenüber dem Scanner stationär angeordnet ist. Zwar erlauben die Laserscanner sehr hohe Bahngeschwindigkeiten, mit denen die einzelnen Laserstrahlimpulse auf dem Rohling entlang bewegt werden können. Jedoch entspricht die dabei erreichbare Genauigkeit nicht den heutigen Anforderungen. Zudem weichen die hergestellten Flächen und Kanten vom geradlinigen Verlauf ab und weisen einen unebenen gezackten Verlauf auf.

Weiter sind auch Laserbearbeitungsmaschinen bekannt, bei denen der Laser über Maschinenachsen relativ zum Rohling bewegt wird. Zwar kann hierbei eine höhere Genauigkeit und eine höhere Qualität der am Rohling erzeugten Flächen und Kanten erreicht werden, aber die erreichbaren Abtragsraten sind gering. Dies ist darauf zurückzuführen, dass die Dynamik und die Geschwindigkeit der Maschinenachsen begrenzt ist. Zur Erhöhung der Dynamik der Maschinenachsen muss ein sehr großer Aufwand betrieben werden, was die Laserbearbeitungsmaschine sehr teuer macht.

Ein Verfahren und eine Vorrichtung zur Laserbearbeitung eines Rohlings sind beispielsweise aus der DE 299 08 585 U1 bekannt. Die Vorrichtung verfügt über einen Laser zur Erzeugung von Laserstrahlimpulsen. Über eine Antriebseinheit wird der Laser und/oder die Werkstückhalterung in Richtung und quer zur optischen Achse des Lasers bewegt. Der Laserstrahl wird dabei zum Abtragen von einzelnen Werkstoffschichten in mehreren nebeneinander verlaufenden oder überlappenden Linien über die gesamte Breite der abzutragenden Fläche bewegt. Das Material wird daher punktförmig an den Auftreffstellen des Laserstrahlimpulses abgetragen. Um einen kontinuierlichen Materialabtrag zu erhalten überlappen sich die Auftreffstellen zwischen 5 und 25 Prozent. Bei gepulsten Lasern mit sehr hohen Frequenzen sind hierfür entsprechend große Vorschubgeschwindigkeiten notwendig. Wie bereits geschildert ist die Abtragsrate bei dieser Vorgehensweise gering und die Bearbeitungszeiten entsprechend lang.

In WO 2006/038017 A2 sind zwei verschiedene Ausführungsformen einer Laserbearbeitungsvorrichtung beschrieben. Bei der ersten Ausführungsform wird mit Hilfe eines Laserscanners eine Pulsfläche aus mehreren nebeneinander angeordneten Auftreffstellen der Laserstrahlimpulse gebildet. Der Materialabtrag erfolgt an den Auftreffstellen der Laserstrahlimpulse in der Pulsfläche. Bei einer zweiten Ausführungsform wird kein flächiger Materialabtrag bewirkt, sondern der Rohling wird durchtrennt. Zunächst wird der Rohling durchbohrt. Nach dem Durchbohren beginnt eine Vorschubbewegung zum Durchschneiden des Rohlings in einem Zug. Dies entspricht den beiden bereits eingangs geschilderten Varianten der Laserbearbeitung.

Aus DE 10 2007 012 815 A1 ist ein Verfahren bekannt, bei dem die Auftreffstellen der Laserstrahlimpulse mittels eines Scanners entlang eines Rasters platziert werden. Der Scanner soll einen schnellen und genauen Versatz der Laserstrahlimpulse mit einer vorgegebenen Überlappung ermöglichen. Hierzu weist der Scanner zwei der Scanner zwei Strahlführungen auf, die beispielsweise rechtwinkelig zueinander ausgerichtete Ablenkbewegungen der Laserstrahlimpulse verursachen. Der Versatz zwischen zwei aufeinanderfolgenden Laserstrahlimpulsen kann dadurch vergrößert werden.

DE 10 2007 012 816 A1 beschreibt ein Verfahren zur Werkstückbearbeitung mittels eines Laserstrahls. Der Laserstrahl wird mittels einer Strahlführung innerhalb eines maximal erreichbaren Arbeitsfensters über die Werkstückoberfläche geführt. Die Strahlführung und das Werkstück sind in einer Verschiebungsrichtung um eine Verschiebungsstrecke so gegeneinander verschiebbar, dass sie zueinander eine erste und eine zweite Arbeitsrelativposition einnehmen können. Die nacheinander durch unterschiedliche relative Positionierungen von Werkstück und Strahlführung zueinander einzustellenden Arbeitsfenster überlappen. Im Überlappungsbereich können Stellen des Werkstücks wahlweise aus dem einen Arbeitsfenster der ersten Arbeitsrelativposition oder aus dem anderen Arbeitsfenster der zweiten Arbeitsrelativposition bearbeitet werden.

Das aus WO 2005/044505 A1 bekannte Verfahren sieht vor, dass abhängig von der herzustellenden Form (Bohrung oder Gesenk) an einem Werkstück unterschiedliche Laserköpfe verwendet werden. Die beiden Laserköpfe werden mit unterschiedlichen Parametern, wie etwa Impulsfrequenz, Impulsdauer, Pulsspitzenleitung, usw. des Lasers betrieben.

Bei dem aus DE19860585 bekannten Verfahren zur Bearbeitung von Werkstücken aus diamanthaltigen Werkstoffen, insbesondere zur Schneidkantenbearbeitung von Werkzeugen aus diamanthaltigen Werkstoffen, wird von dem Werkstück mit einem gepulsten Laserstrahl Werkstoff Punkt für Punkt abgetragen, während der Laserstrahl über die Werkstückoberfläche geführt wird.

Ausgehend von diesen bekannten Verfahren und Vorrichtungen kann es als Aufgabe der vorliegenden Erfindung angesehen werden, ein Verfahren und eine Laserbearbeitungsvorrichtung bereit zu stellen, das bzw. die das Erzeugen von genauen Flächen- und Kantenverläufen gewährleistet und dabei dennoch wirtschaftlich ist.

Diese Aufgabe wird durch ein Verfahren mit den Merkmalen des Patentanspruches 1 sowie eine Vorrichtung mit den Merkmalen des Patentanspruches 12 gelöst.

Erfindungsgemäß ist es vorgesehen, einen gepulsten Laser zu verwenden, der mit einer vorgegebenen Impulsfrequenz Laserstrahlimpulse erzeugt. Über eine Ablenkeinrichtung werden die Laserstrahlimpulse in einer fest vorgegebenen Reihenfolge auf eine Vielzahl von Auftreffstellen auf der Oberfläche des Rohlings gerichtet. Diese vorgegebenen Auftreffstellen bilden eine zweidimensionale Pulsfläche auf der Oberfläche des Rohlings. Es wird damit eine Sequenz von Laserstrahlimpulsen erzeugt, die auf voneinander verschiedene vorgegebene Auftreffstellen in der Pulsfläche gerichtet sind. Diese Sequenz wird in einer vorgegebenen Reihenfolge immer wieder wiederholt. Währenddessen findet eine fortgesetzte Relativbewegung zwischen dem Rohling und der Pulsfläche statt. Die Relativbewegung erfolgt ohne Stillstand der Pulsfläche auf der Oberfläche des Rohlings. Ergeben sich beispielsweise im Rahmen einer Richtungsumkehr der Relativbewegung kurze Stillstandsphasen, so befindet sich die Pulsfläche während dieser Stillstandsphasen außerhalb des Rohlings. Sobald auch nur ein Abschnitt der Pulsfläche auf die Oberfläche des Rohlings trifft, wird die Relativbewegung stillstandslos ausgeführt. Eine Positioniereinrichtung bewegt den Rohling und/oder die Ablenkeinrichtung gegebenenfalls zusammen mit dem Laser in eine Relativbewegungsrichtung entlang der zu erzeugenden Kante oder Fläche. Dabei bewegt sich die Pulsfläche mit der durch die Positionseinrichtung für die Relativbewegung vorgegebenen Geschwindigkeit auf der Oberfläche des Rohlings entlang. Auf diese Weise erfolgt ein Materialabtrag im Bereich der Pulsfläche, die wie ein Werkzeug relativ zum Rohling bewegt wird. Dadurch wird zum einen eine hohe Abtragsrate erreicht und zum anderen können auf diese Weise sehr exakte Kanten- oder Flächenverläufe mit geringen Abweichungen oder Ungenauigkeiten von der gewünschten Verlaufslinie hergestellt werden. Die Erfindung kombiniert die beiden bisher alternativ verwendeten Laserbearbeitungsverfahren. Die schnelle Scanneroptik wird verwendet um die Pulsfläche zu bilden. Die Scanneroptik positioniert die Laserstrahlimpulse dabei nicht entlang der gewünschten Kontur der herzustellenden Fläche oder Kante, sondern richtet die Laserstrahlimpulse auf die Auftreffstellen der Pulsfläche. Die gleichzeitige Relativbewegung der Pulsfläche gegenüber dem Rohling über Maschinenachsen gewährleistet die gewünschte Genauigkeit, um Flächen- und Kantenverläufe mit geringen Abweichungen vom vorgegebenen Verlauf zu erhalten.

Die Positioniereinrichtung stellt zumindest zeitweise einen Neigungswinkel mit einem Betrag größer als Null zwischen der Abstrahlrichtung der Laserstrahlimpulse und einer am Rohling zu erzeugenden Fläche ein. Die Laserstrahlimpulse verlaufen dabei bevorzugt rechtwinkelig zur Relativbewegungsrichtung. Die Pulsfläche ist quer zu der zu erzeugenden Fläche ausgerichtet. Durch die um den Neigungswinkel schräg zur erzeugenden Fläche ausgerichteten Laserstrahlimpulse wird beim Materialabtrag ein zusätzlicher Freiraum geschaffen, der das Entfernen des entstehenden Plasmas im Abtragungsbereich verbessert. Zu Beginn des Verfahrens kann der Neigungswinkel gleich Null sein und nach dem Erreichen eines vorgegebenen Verfahrenszustandes während der Herstellung vergrößert werden.

Vorzugsweise werden gepulste Laser mit einer Frequenz zwischen 1 und 10 MHz verwendet.

Der einzustellende Neigungswinkel hängt vom zu bearbeitenden Material des Rohlings ab. Der Neigungswinkel kann Beträge im Bereich zwischen 0 Grad und 45 Grad, vorzugsweise im Bereich von 5 Grad bis 25 Grad annehmen. Über die Positioniereinrichtung kann der Neigungswinkel auch während der Bearbeitung des Rohlings verändert und auf einen gewünschten Wert eingestellt werden. Insbesondere, wenn der Rohling aus mehreren Schichten unterschiedlichen Materials besteht und sich das zu bearbeitende Material dadurch im Laufe der Bearbeitung ändert, kann der vorgegebene Neigungswinkel zwischen unterschiedlichen Werten an das jeweilige Material angepasst werden.

Die Pulsfläche kann eine im Wesentlichen rechteckförmige Kontur aufweisen. Die die Pulsfläche bildenden Auftreffstellen sind dabei innerhalb einer Rechteckkontur nebeneinander angeordnet, so dass mehrere der an den Auftreffstellen durch die Laserstrahlimpulse gebildeten Krater die Rechteckkontur berühren. Anders ausgedrückt sind die äußeren Auftreffstellen der Pulsfläche auf einer Rechtecklinie angeordnet. Anstelle einer rechteckförmigen Pulsfläche können auch andere Polygonflächen, elliptische oder kreisrunde Flächen oder ringsegmentförmige Flächen vorgegeben sein. Die Form der Pulsfläche kann an den zu erreichenden Materialabtrag und den zu erreichenden gewünschten Konturverlauf des aus dem Rohling zu erzeugenden Werkstücks angepasst werden.

Die Ablenkeinrichtung richtet die Laserstrahlimpulse auf Auftreffstellen, die entlang einer vorgegebenen Pulsbahn angeordnet sind. Die Pulsbahn hängt dabei von der Form der Pulsfläche ab und weist vorzugsweise einen mäanderförmigen oder spiralförmigen Verlauf auf. Dabei kann die Pulsbahn eine Auftreffstelle als Startpunkt und eine Auftreffstelle als Endpunkt aufweisen, wobei der Endpunkt an dem Rand der Pulsfläche angeordnet ist, der der herzustellenden Kontur zugeordnet ist. Der den Endpunkt aufweisende Bahnendabschnitt der Pulsbahn ist bevorzugt parallel oder tangential zur Relativbewegungsrichtung ausgerichtet. Bei der Rückstellbewegung vom Endpunkt zum Startpunkt wird ein relativ großer Verstellweg zurückgelegt, der deutlich größer ist, als die anderen Verstellwege zwischen zwei aufeinanderfolgenden Auftreffstellen entlang der Pulsbahn. Da die Genauigkeit der Positionierung der Laserstrahlimpulse durch die Ablenkeinrichtung begrenzt ist und die Ablenkeinrichtung zum Überschwingen neigt, ist die Bewegungsrichtung der Rückstellbewegung von der herzustellenden Kante und/oder Fläche weg gerichtet. Dadurch können qualitative Beeinträchtigungen der herzustellenden Kontur vermieden werden.

Der Abstand zwischen zwei aufeinanderfolgenden Auftreffstellen entlang der Pulsbahn kann wunschgemäß vorgegeben werden, insbesondere durch Wahl oder Einstellung der Impulsfrequenz des Lasers und der Verstellgeschwindigkeit der Ablenkeinrichtung.

Zwei aufeinander folgende Laserstrahlimpulse können auf unterschiedliche Auftreffstellen in der Pulsfläche gerichtet sein. Alternativ hierzu ist es auch möglich, eine Impulsfolge mit zwei oder mehr Laserstrahlimpulsen auf dieselbe Auftreffstelle zu richten und erst die nächste Impulsfolge auf eine davon verschiedene Auftreffstelle zu richten. Die Energie des Einzelimpulses oder der auf eine Auftreffstelle gerichtete Impulsfolge ist vorgegeben und verteilt sich entsprechend der Anzahl der verwendeten Impulse. Je größer die Anzahl der in eine Impulsfolge enthaltenen Laserstrahlimpulse ist, desto geringer ist die in einem einzelnen Laserstrahlimpuls enthaltene Energie.

Das Entfernen des die zu erzeugende Fläche bedeckenden, abzutragenden Materialteils des Rohlings erfolgt schichtweise in mehreren im Wesentlichen parallel zur Pulsfläche verlaufenden Abtragsschichten. Die Dicke der Abtragsschicht - in Abstrahlrichtung der Laserstrahlimpulse gesehen - hängt ab von der Impulsfrequenz des Lasers und der Relativgeschwindigkeit der Pulsfläche gegenüber dem Rohling. Es können Schichtdicken von mehreren Hunderstel Millimetern erreicht werden. Die Abtragsschichten verlaufen quer vor der herzustellenden Fläche. Aus dem Rohling kann ein Schneidwerkzeug mit wenigstens einer Schneidkante hergestellt werden. Der Rohling weist dabei vorzugsweise eine Schneidstoffschicht oder ein Schneidstoffelement auf, die bzw. das auf einer Trägerschicht oder einem Trägerelement angeordnet ist. Der abzutragende Materialteil erstreckt sich über beide Schichten. Die Positioniereinrichtung kann dabei für das Abtragen des Materials der Schneidstoffschicht einen ersten Neigungswinkel und für das Abtragen des Materials der Trägerschicht einen zweiten Neigungswinkel einstellen. Auf diese Weise können optimale Abtragsraten abhängig vom zu bearbeitenden Material erreicht werden.

Bevorzugt erfolgt nach dem Abtragen jeder Abtragsschicht eine Anpassung bzw. Justierung der Fokuslage der Laserstrahlimpulse über eine Fokussieroptik oder die Positioniereinrichtung.

Es ist auch möglich, weitere Bearbeitungsparameter materialabhängig vorzugeben. Beispielsweise kann die Intensität der Laserimpulse während des Abtragens des Materials der Schneidstoffschicht verschieden sein von der Intensität während des Abtragens des Materials der Trägerschicht. Dadurch können Abweichungen zwischen dem gewünschten Verlauf der Schneidkante oder herzustellenden Fläche reduziert werden.

Vorteilhafte Merkmale der Erfindung ergeben sich aus den abhängigen Patentansprüchen und der Beschreibung. Die Beschreibung beschränkt sich dabei auf wesentliche Merkmale der Erfindung sowie sonstiger Gegebenheiten. Die Zeichnung ist ergänzend heranzuziehen. Es zeigen:
Figur 1 ein Blockschaltbild eines Ausführungsbeispiels einer Laserbearbeitungsvorrichtung,
Figur 2 eine schematische perspektivische Darstellung eines Ausführungsbeispiels einer Laserbearbeitungsvorrichtung,
Figuren 3-5 verschiedene Formen von Pulsflächen,
Figur 6 eine schematische Schnittdarstellung durch zwei Auftreffstellen,
Figur 7 die Intensität von Laserstrahlimpulsen bzw. Impulsfolgen über der Zeit,
Figur 8a eine perspektivische schematische Ansicht des Rohlings mit der Pulsfläche,
Figur 8b eine schematische Detaildarstellung des durch die Relativbewegung zwischen Pulsfläche und Rohling erzeugten Materialabtrags,
Figuren 9-13 schematische, quer zur Relativbewegungsrichtung geschnittene Teildarstellungen des Rohlings in unterschiedlichen Stadien der Bearbeitung,
Figur 14 eine schematische, blockschaltbildähnliche Darstellung eines weiteren Ausführungsbeispiels der Laserbearbeitungsvorrichtung mit einer Vakuumkammer und
Figur 15 eine schematische, blockschaltbildähnliche Darstellung einer Abwandlung des Ausführungsbeispiels nach Figur 14.

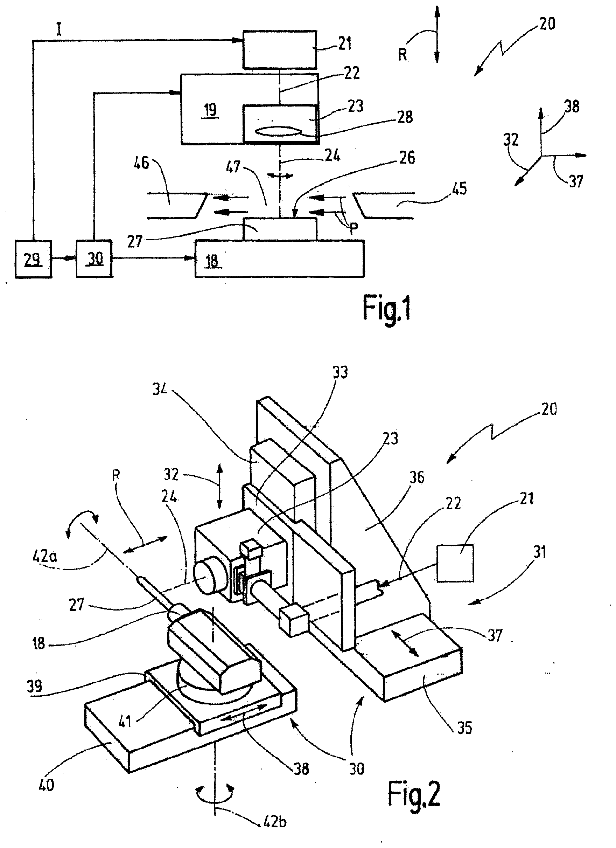

In Figur 1 ist schematisch eine Laserbearbeitungsvorrichtung 20 dargestellt. Die Laserbearbeitungsvorrichtung 20 weist einen gepulsten Laser 21 auf, der einen gepulsten Laserstrahl 22 erzeugt und einem Laserkopf 19 mit einer Ablenkeinrichtung 23 zuführt. Die Ablenkeinrichtung 23 kann die Ausrichtung von abgegebenen Laserstrahlimpulsen 24 verändern und dadurch den Laserstrahlimpuls 24 auf eine vorgegebene Auftreffstelle 25 auf einer Oberfläche 26 eines Rohlings 27 richten. Die Ablenkeinrichtung 23 kann auch als Scannereinrichtung bezeichnet werden. Sie umfasst auch eine Fokussieroptik 28. An einer Werkstückhalterung 18 ist der Rohling 27 in einem Aufnahmebereich 47 gehalten.

Die Laserbearbeitungsvorrichtung 20 weist eine Steuereinrichtung 29 auf. Diese steuert eine Positioniereinrichtung 30, über die eine Relativposition zwischen dem Laserkopf 19 und dem Rohling 27 eingestellt und verändert werden kann. Die Anzahl der linearen Achsen und Drehachsen der Positioniereinrichtung 30 kann variieren. Beim bevorzugten Ausführungsbeispiel weist die Positioniereinrichtung 30 einen ersten Verstellantrieb 31 auf, mittels dem der den Laserkopf 19 in eine erste Richtung 32 bewegt werden kann. Vorzugsweise handelt es sich dabei um eine lineare Bewegung in die erste Richtung 32. Der erste Verstellantrieb 31 weist beispielsweise einen ersten Schlitten 33 auf, der auf einem ersten Schlittenträger 34 linear verschiebbar geführt gelagert ist. Auf dem ersten Schlitten 33 ist der Laserkopf 19 befestigt.

Zur linearen Verschiebung des Werkstückhalters 18 bzw. des Rohlings 27 sowie des Laserkopfes 19 kann die Positioniereinrichtung 30 weitere Verstellantriebe aufweisen. Beispielsgemäß ist ein zweiter Schlittenträger 35 vorgesehen, an dem ein zweiter Schlitten 36 in einer zweiten Richtung 37 verschiebbar geführt gelagert ist. Auf diesem zweiten Schlitten 36 ist der erste Schlittenträger 34 montiert. Die zweite Richtung 37 verläuft rechtwinklig zur ersten Richtung 32. Die erste und zweite Richtung 32, 37 spannen eine Ebene auf, die im Wesentlichen quer zu einer Abstrahlrichtung R der Laserstrahlimpulse 24 verläuft.

Eine dritte Richtung 38 verläuft rechtwinklig zu den beiden anderen Richtungen 32, 37. Ein dritter Schlitten 39 ist auf einem dritten Schlittenträger 40 in dieser dritten Richtung 38 linear verschiebbar gelagert. Über diese Schlittenanordnung 39, 40 ist der Werkstückträger 18 in der dritten Richtung 38 verschiebbar, wodurch der Abstand der Werkstückhalterung 18 und damit des Rohlings 27 zum Laserkopf 19 eingestellt werden kann. Die dritte Richtung 38 entspricht beispielsgemäß der Abstrahlrichtung R. Beim Ausführungsbeispiel nach Figur 2 ist die Abstrahlrichtung R im Wesentlichen horizontal ausgerichtet, wobei alternativ auch eine vertikale Ausrichtung möglich ist.

Die Positioniereinrichtung 30 kann daher die Relativbewegung zwischen Laserkopf 19 und Werkstückhalterung 18 bzw. Rohling 27 in einer Relativbewegungsrichtung V bewirken. Die Relativbewegungsrichtung V muss räumlich nicht konstant sein, sondern kann eine beliebeige Bahn bezogen auf die drei Richtungen 32, 37, 38 beschreiben.

Der Werkstückhalterung 18 ist über einen Schwenkantrieb 41 auf dem dritten Schlitten 39 angeordnet, der eine Schwenkbewegung der Werkstückhalterung 18 um eine erste Schwenkachse 42a und/oder eine zweite Schwenkachse 42b ausführen kann. Die erste Schwenkachse 42a verläuft in die zweite Richtung 37, während sich die zweite Schwenkachse 42b in die erste Richtung 32 erstreckt. Mit Hilfe des Schwenkantriebs 41 kann ein Winkel, unter dem der Laserstrahlimpuls 24 auf den Rohling 27 auftrifft, verändert und wunschgemäß eingestellt werden.

Die Positioniereinrichtung 30 kann zusätzliche weitere Verstellantriebe oder Schwenk- bzw. Drehantriebe zur Einstellung der Relativlage zwischen Rohling 27 und Laserstrahlimpuls 24 aufweisen. In Abwandlung zum dargestellten Ausführungsbeispiel ist es auch möglich, den Laserkopf 19 unbeweglich anzuordnen und lediglich die Werkstückhalterung 18 für den Rohling 27 verschiebbar und schwenkbar auszugestalten. Für die Realisierung der Positioniereinrichtung 30 bestehen viele Variationsmöglichkeiten. Die durch die Positioniereinrichtung 30 einzustellende Relativlage zwischen Laserkopf 19 und Werkstückhalterung 18 wird durch die Steuereinrichtung 29 vorgegeben.

Die Steuereinrichtung 29 steuert den Laserkopf 19 an, um Bearbeitungsparameter vor oder während der Bearbeitung des Rohlings 27 einzustellen oder zu verändern. Bei den Bearbeitungsparametern handelt es sich beispielsweise um die Intensität I der Laserstrahlimpulse und/oder die Impulsfrequenz f des Lasers 21 in einem Frequenzbereich von vorzugsweise 1 Mhz bis 10 MHz und/oder die Brennweite der Fokussieroptik 28 und/oder dergleichen.

Die Laserbearbeitungsvorrichtung 20 weist eine Prozessgaszufuhr 45 sowie eine Prozessgasabsaugung 46 auf, die in der zweiten Richtung 37 gesehen zu beiden Seiten des Aufnahmebereichs 47 angeordnet sind (Fig. 1). Beim bevorzugten Ausführungsbeispiel entsteht dadurch ein Prozessgasstrom P in der zweiten Richtung 37. Während der Bearbeitung des Rohlings 27 kann ein Prozessgasstrom P im Bereich der zu bearbeitenden Oberfläche 26 eingestellt werden, um das bei der Laserablation durch Sublimation des Materials entstehende Plasma von der zu bearbeitenden Stelle am Rohling 27 weg zu transportieren.

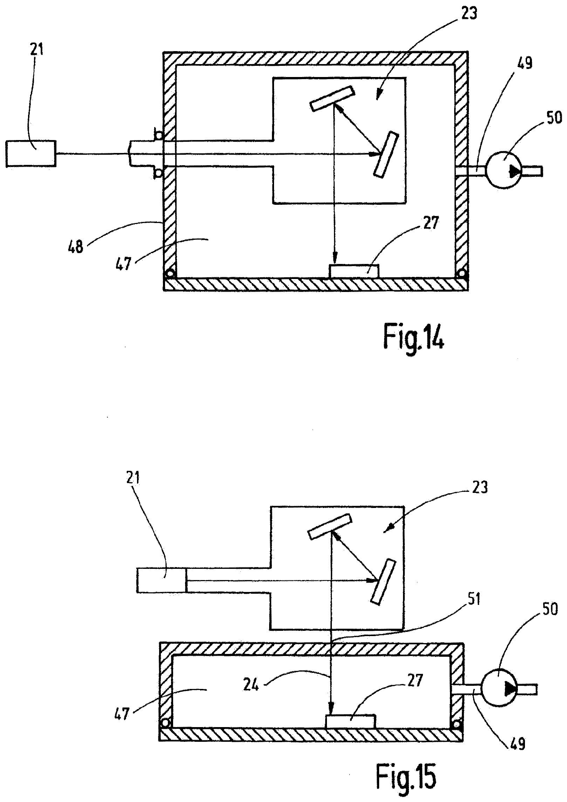

Bei den in den Figuren 14 und 15 gezeigten Ausführungsbeispielen ist alternativ zur Erzeugung des Prozessgasstromes P eine Vakuumkammer 48 vorgesehen, wobei sich die Werkstückhalterung 18 und der Aufnahmebereich 47 für den Rohling 27 innerhalb der Vakuumkammer 48 befinden. Über eine Absaugleitung 49 ist die Vakuumkammer 48 an eine Vakuumpumpe 50 angeschlossen, so dass im Aufnahmebereich 47 ein Vakuum hergestellt werden kann. Die Ablenkeinrichtung 23 kann dabei entweder innerhalb der Vakuumkammer 48 angeordnet sein (Figur 14) oder sich alternativ außerhalb der Vakuumkammer 48 befinden, wie dies beispielsweise in den Figuren 2 und 15 gezeigt ist. In diesem Fall muss die Vakuumkammer 48 im Bereich der Eintrittsstelle 51 des Laserstrahlimpulses 24 transparent sein für die verwendete Laserwellenlänge.

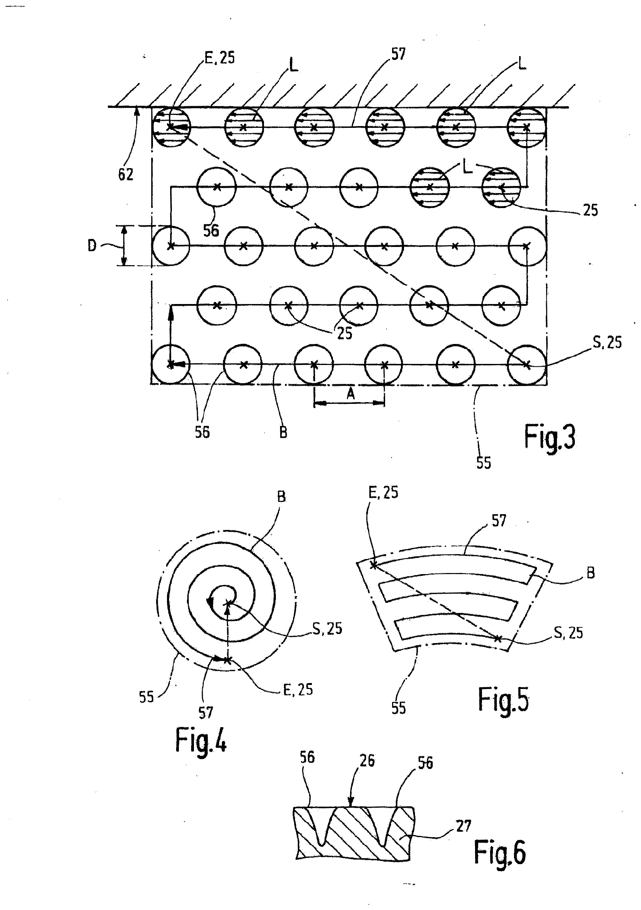

Mit Hilfe der Ablenkeinrichtung 23 werden die Laserstrahlimpulse 24 im Bereich einer Pulsfläche 55 auf die Oberfläche 26 des Rohlings 27 ausgerichtet. Ein Laserstrahlimpuls 24 trifft an der Auftreffstelle 25 auf die Oberfläche 26 auf und verursacht dort einen Materialabtrag, wodurch sich ein trichterförmiger Krater 56 bildet, wie dies in Figur 6 schematisch veranschaulicht ist. Als Auftreffstelle 25 wird hier der Mittelpunkt bzw. die Mittelachse des Kraters 56 bezeichnet. Eine Vielzahl von vorgegebenen, beabstandeten Auftreffstellen 25 bildet die Pulsfläche 55.

Die Steuereinrichtung 29 gibt der Ablenkeinrichtung 23 eine Pulsbahn B für das Anordnen aufeinanderfolgender Auftreffstellen 25 vor. Die Ablenkeinrichtung 23 richtet die Laserstrahlimpulse 24 nacheinander auf die Auftreffstellen 25 der Pulsbahn B. Der Verlauf der Pulsbahn B hängt von der Form der Pulsfläche 55 ab und weist bei der rechteckigen Pulsfläche 55 nach Figur 3 einen mäandrierenden Verlauf auf, der aus geradlinigen Teilverläufen zusammengesetzt ist. Eine Auftreffstelle 25 in einem der Eckpunkte der Pulsfläche 55 bildet einen Startpunkt S, der von der herzustellenden Kante 60 oder Fläche 62 beabstandet ist. Ausgehend vom Startpunkt S werden die Laserstahlimpulse 24 entlang der Pulsbahn B platziert bis zur Auftreffstelle 25 in der diagonal gegenüberliegenden Ecke der Pulsfläche, die den Endpunkt E der Pulsbahn B markiert. Der den Endpunkt E aufweisende Bahnendabschnitt 57 der Pulsbahn B verläuft beispielsgemäß parallel zu der herzustellenden Fläche 62 oder Kante 60. Dieser Bahnendabschnitt 57 grenzt unmittelbar an die herzustellenden Fläche 62 oder Kante 60 an. Nach dem Erreichen des Endpunkts E findet eine Rückstellbewegung in der Ablenkeinrichtung 23 statt und die Laserstrahlimpulse 24 werden anschließend erneut beginnend beim Startpunkt S auf der Pulsbahn B platziert. Die Rückstellbewegung ist von der herzustellenden Kontur 60, 62 weg gerichtet. Sie ist in den Figuren 3 bis 5 jeweils durch einen gestrichelten Pfeil veranschaulicht.

Der Abstand A zwischen zwei aufeinanderfolgenden Auftreffstellen 25 entlang der Pulsbahn B wird über die Impulsfrequenz f des Lasers 21 und die Verstellgeschwindigkeit der Ablenkeinrichtung 23 vorgegeben. Bei Richtungsänderungen in der Pulsbahn B kann der Abstand auch variieren.

Bei einer Pulsfläche 55 mit runder, elliptischer oder einer anderen gekrümmten Form kann der den Endpunkt E aufweisende Bahnendabschnitt 57 auch tangential zur herzustellenden Kontur 60, 62 verlaufen (Figur 4). Die Pulsbahn B ist dabei spiralförmig. Die Pulsfläche 55 kann auch die Form eines Ringsegments haben (Figur 5).

Alternativ zum Ausrichten der aufeinander folgenden Laserstrahlimpulse 24 entlang einer mäander- oder schlangenförmigen Bahn können auch andere in der Steuereinrichtung 29 vorgegebene Pulsbahnen gewählt werden, bei denen nacheinander alle die Pulsfläche 55 definierenden Auftreffstellen 25 vom Startpunkt S zum Endpunkt E durchlaufen werden. Vorzugsweise sind der Startpunkt S und der Endpunkt E in Richtung des Prozessgasstromes P möglichst weit voneinander beabstandet, wobei das Prozessgas vom Endpunkt E zum Startpunkt S strömt.

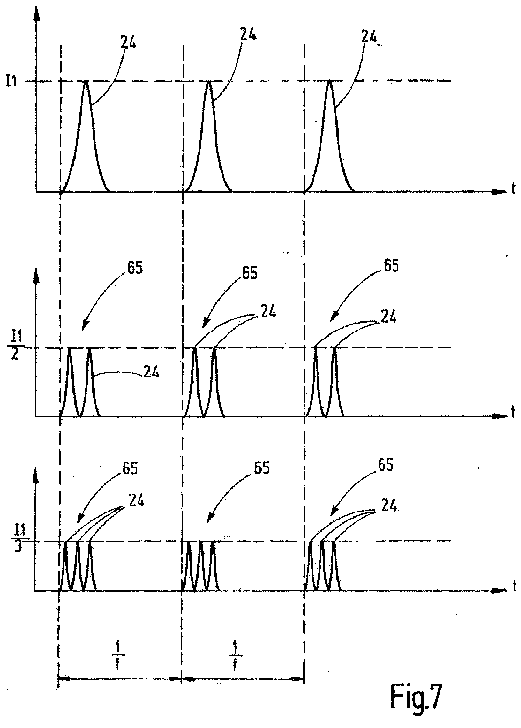

Beim bevorzugten Ausführungsbeispiel wird auf jede Auftreffstelle 25 lediglich ein Laserstrahlimpuls 24 gerichtet, während der nächste Laserstrahlimpuls 24 auf eine andere Auftreffstelle 25 der Pulsfläche 55 gerichtet wird. Ein solches Verfahren ist in Figur 7 im oberen Schaubild dargestellt. Der zeitliche Abstand zwischen zwei aufeinander folgenden Laserstrahlimpulsen 24 ergibt sich aus dem Kehrwert der aktuellen Impulsfrequenz f des Lasers 21. Der gepulste Laser 21 kann als Pikosekundenlaser oder Femptosekundenlaser ausgestaltet sein.

Werden aufeinander folgende Laserstrahlimpulse 24 auf unterschiedliche Auftreffstellen 25 gerichtet, so haben diese Laserstrahlimpulse 24 die Intensität I1. Wie in den beiden anderen Diagrammen in Figur 7 gezeigt, können auf eine Auftreffstelle 25 auch zwei oder mehr Laserstrahlimpulse 24 gerichtet werden, bevor die nächste Auftreffstelle 25 angesteuert wird. Mit anderen Worten richtet die Ablenkeinrichtung 23 auf eine Auftreffstelle 25 zunächst eine Impulsfolge 65 mehrerer Laserstrahlimpulse 24, bevor die anschließende Impulsfolge 65 auf eine andere Auftreffstelle 25 gerichtet wird. Die in einer Impulsfolge 65 enthaltene auf eine Auftreffstelle 25 einwirkende Energie soll dabei einem einzelnen Laserstrahlimpuls 24 mit der Intensität I1 entsprechen. Daher wird die Intensität I eines einzelnen Laserstrahlimpulses 24 einer Impulsfolge 65 reduziert. Bei dem hier dargestellten Ausführungsbeispiel ist die Gesamtintensität I einer Impulsfolge 65 konstant. Daher entspricht die Intensität I eines einzelnen Laserstrahlimpulses 24 in einer Impulsfolge 65 dem Quotienten aus der Intensität I1 geteilt durch die Anzahl der in der Impulsfolge 65 enthaltenen Laserstrahlimpulse 24.

Der Durchmesser D der Krater 56 hängt vom wirksamen Durchmesser der Laserstrahlimpulse 24 an der Auftreffstelle 25 ab, der über die Fokussieroptik 28 vorgegeben und vorzugsweise eingestellt und insbesondere auch während der Bearbeitung verändert werden kann.

Während nun über die Ablenkeinrichtung 23 eine zweidimensionale, räumlich begrenzte Pulsfläche 55 bearbeitet wird, veranlasst die Positioniereinrichtung 30 gleichzeitig eine Relativbewegung der Pulsfläche 55 entlang einer herzustellenden Kante 60 oder Fläche 62 auf der Oberfläche 26 des Rohlings 27. Mit anderen Worten bewegt sich der durch die Pulsfläche 55 mit der Vielzahl von Auftreffstellen 25 der Laserstrahlimpulse 24 gebildete Materialabtragsbereich mit einer vorgegebenen Relativgeschwindigkeit vrel in Relativbewegungsrichtung V, seitlich entlang der herzustellenden Kante 60 bzw. Fläche 62. Die Relativgeschwindigkeit vrel ist stets ungleich Null, solange zumindest ein Teil der Pulsfläche 55 auf die Oberfläche 26 des Rohlings trifft. Dadurch können aus dem Rohling 27 Kanten bzw. Flächen mit lediglich sehr geringer Abweichung vom gewünschten Kanten- bzw. Flächenverlauf hergestellt werden. Dies ist insbesondere bei der Herstellung eines Schneidwerkzeugs relevant, an dem eine oder mehrere Schneidkanten 60 erzeugt werden sollen, die von einer Spanfläche 61 und einer Freifläche 62 begrenzt wird.

Über die Positioniereinrichtung 30 und beispielsgemäß die Schwenkeinrichtung 41 wird ein Neigungswinkel α eingestellt. Der Neigungswinkel α ist definiert zwischen der Abstrahlrichtung R der Laserstrahlimpulse 24 und einer Ebene F, in der sich die aus dem Rohling 27 herauszuarbeitende Fläche 62 bezogen auf die aktuelle Position der Pulsfläche 55 befindet. Bei einem gekrümmten Flächenverlauf stellt die Ebene F eine Tangentialebene an die aktuell bearbeitete Stelle dar. Die einzustellende Neigungswinkel α wird durch die Steuereinrichtung 29 vorgegeben und kann sich während der Bearbeitung des Rohlings 27 ändern. Um einen jeweils optimale Abtragsrate zu erzielen, wird der Neigungswinkel α an das abzutragende Material des Rohlings 27 angepasst. Bei Rohlingen 27, die aus mehreren verschiedenen Teilen oder Materialschichten aufgebaut sind, wird auf diese Weise stets ein optimal auf das Material abgestimmter Neigungswinkel α gewährleistet, wodurch sich die Prozesseffizienz deutlich erhöht.

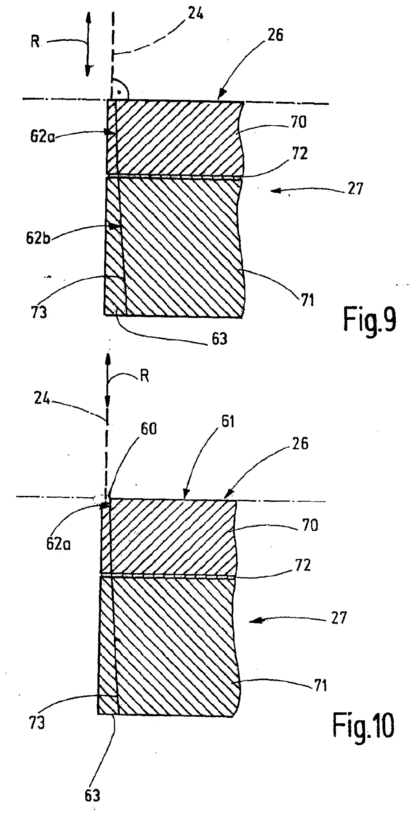

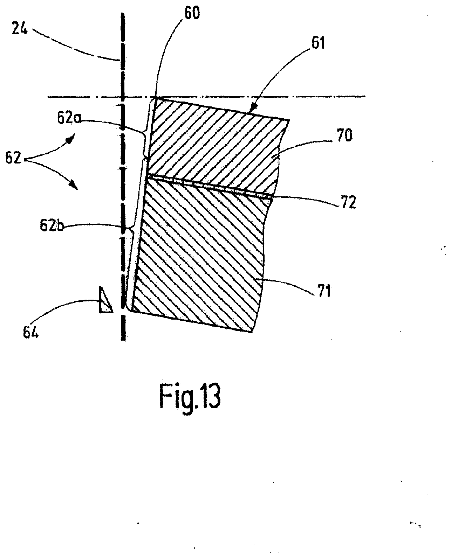

Anhand der Figuren 9 bis 13 werden im Folgenden verschiedene Stadien bei der Bearbeitung des Rohlings 27 zur Erzeugung einer Schneidkante 60 sowie einer an die Schneidkante 60 angrenzenden Freifläche 62 erläutert.

Der Rohling 27 besteht aus einer Schneidstoffschicht, die von einem Scheidelement 70 gebildet ist und beispielsweise aus polykristallinem Diamant (PKD) oder CVD-Diamant besteht. Das Scheidelement 70 ist auf eine Trägerelement 71 aufgebracht, das eine Trägerschicht darstellt und beispielsweise aus Hartmetall besteht. Die beiden Elemente 70, 71 sind über eine Verbindungsschicht 72, z.B. Lötschicht, fest miteinander verbunden. Alternativ hierzu könnte eine Schneidstoffschicht auch direkt auf eine Trägerschicht aufgebracht werden, beispielsweise durch ein Verfahren wie PVD.

Die obere Seite des Rohlings 27 bildet beim fertig bearbeiteten Rohling 27 die Spanfläche 61 des Schneidwerkzeugs. Im Anschluss an die Spanfläche 61 soll eine Freifläche 62 aus dem Rohling 27 herausgearbeitet werden, deren gewünschter Verlauf durch die Line 73 veranschaulicht ist. Der herzustellende Keilwinkel beträgt beispielhaft 90°. Der an die herzustellende Schneidkante 60 angrenzende erste Freiflächenabschnitt 62a schließt mit der Spanfläche 61 den Keilwinkel ein. An den ersten Freiflächenabschnitt 62a soll sich ein zweiter Freiflächenabschnitt 62b anschließen, der mit der Spanfläche 61 einen Winkel kleiner als der Keilwinkel einschließt. Um die Freifläche 62 und damit auch die Schneidkante 60 herzustellen, muss ein Materialteil 63 des Rohlings vollständig abgetragen werden, der die herzustellende Freifläche 62 vollständig überdeckt und sowohl Teile des Schneidelements 70 als auch des Trägerelements 71 umfasst. Das Materialteil 63 enthält eine an die Spanfläche 61 angrenzende Seitenfläche des Rohlings 27. Vorzugsweise wird dieses Materialteil 63 während des Abtragens nahezu vollständig sublimiert, so dass lediglich ein kleiner Restteil 64 als Abfallstück verbleibt. Der Restteil umfasst weniger als 10% des Volumens des Materialteils 63 und vorzugsweise weniger als 5%.

Die auf die Oberfläche 26 im Bereich der Pulsfläche 55 auftreffenden Laserstrahlimpulse 24 führen zu einem Materialabtrag. Der Laserkopf 19 wird während des Erzeugens der Laserstrahlimpulse 24 in die Relativbewegungsrichtung V bewegt, in den Figuren 9 bis 13 rechtwinklig zur Bildebene, so dass sich die Pulsfläche 55 entlang der Oberfläche 26 des Rohlings 27 verlagert. Die Relativgeschwindigkeit vrel für diese Relativbewegung beträgt einige Millimeter pro Minute und ist um einige Größenordnungen kleiner als die Verstellgeschwindigkeit der Ablenkeinrichtung 23 für das Versetzen der Auftreffstellen 25 entlang der Pulsbahn B, die in der Größenordnung von Metern pro Sekunde liegt. Der Materialabtrag erfolgt schichtweise entlang der herzustellenden Freifläche 62. Bei jeder vollständigen Bewegung der Pulsfläche 55 in Relativbewegungsrichtung V entlang der herzustellenden Fläche 62, was als Konturdurchgang Ki (i=l...n) bezeichnet werden kann, wird eine Abtragsschicht abgetragen. Der Konturdurchgang K1 ... Kn wird n Mal wiederholt, bis der Materialteil 63 vollständig entfernt und die Freifläche 62 hergestellt wurde. Die Abtragsschichten haben eine Dicke dS von einigen Hundertstel Millimetern.

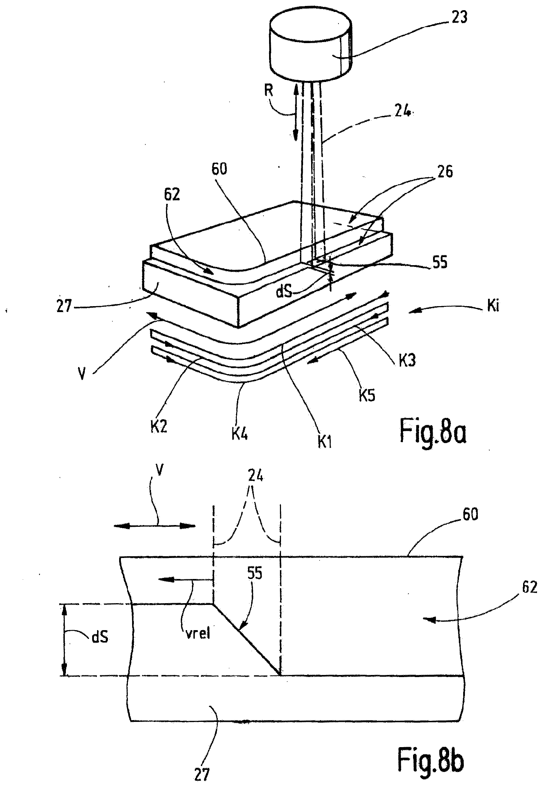

Wie in Figur 8b lediglich schematisch veranschaulicht nimmt die Materialabtragstiefe durch die Relativbewegung im Bereich der Pulsfläche 55 entgegen der Relativbewegungsrichtung zu. An dem in Relativbewegungsrichtung V gesehen hintere Ende der Pulsfläche 55 ist die Materialabtragstiefe am größten und bestimmt die Schichtdicke dS der Abtragsschicht, weil über diese Stelle der Oberfläche 26 des Rohlings 27 durch die fortgesetzte Relativbewegung bereits der vordere Bereich der Pulsfläche 55 verschoben wurde. Im Unterschied dazu ist die Materialabtragstiefe in dem Oberflächenbereich der Oberfläche 26, den das vordere Endes der Pulsfläche 55 gerade erreicht hat, noch gering.

Nach jedem Konturdurchgang Ki (i=l...n) wird die Fokuslage der Laserstrahlimpulse 24 automatisch angepasst, da sich die Entfernung der Oberfläche 26 zum Laserkopf 19 um die Schichtdicke dS der Abtragsschicht geändert hat. Dies wird durch Justierung der Fokuslage mit Hilfe der Fokussieroptik 28 und/oder der Positioniereinrichtung 30 nach jedem Konturdurchgang Ki (i=l...n) ausgeglichen.

Zu Beginn des Verfahrens kann der Neigungswinkel α zwischen dem ersten Flächenabschnitt 62b und der Abstrahlrichtung R gleich null eingestellt und erst nach dem Abtragen einer oder mehrere Abtragsschichten im Anschluss an die Schneidkante 60 betragsmäßig vergrößert werden. Der Neigungswinkel α kann im mathematischen Sinn positiv oder negativ sein. Durch die Festlegung des geeigneten Neigungswinkels α lässt sich der Keilwinkel und die Schneidkante 60 sehr genau fertigen. Alternativ hierzu kann auch gleich zu Beginn ein Neigungswinkel α ungleich Null eingestellt werden.

Zur Erzeugung dieses ersten Flächenabschnitts 62a wird ein erster Neigungswinkel α1 von etwa 5° bis 10° eingestellt. Die Intensität I der Laserstrahlimpulse 24 weist einen ersten Intensitätswert IK auf. Sobald ein ausreichend großer Bereich der Freifläche 62 hergestellt wurde und somit ein Mindestabstand der Pulsfläche 55 von der Schneidkante 60 erreicht ist, kann die Intensität der Laserstrahlimpulse 24 auf einen zweiten Intensitätswert IG (symbolisiert durch eine dicke Linie der Laserstrahlimpulse 24) geändert werden, der bei dem hier dargestellten Beispiel größer ist, als der erste Intensitätswert IK (symbolisiert durch eine dünne Linie der Laserstrahlimpulse 24): IK < IG.

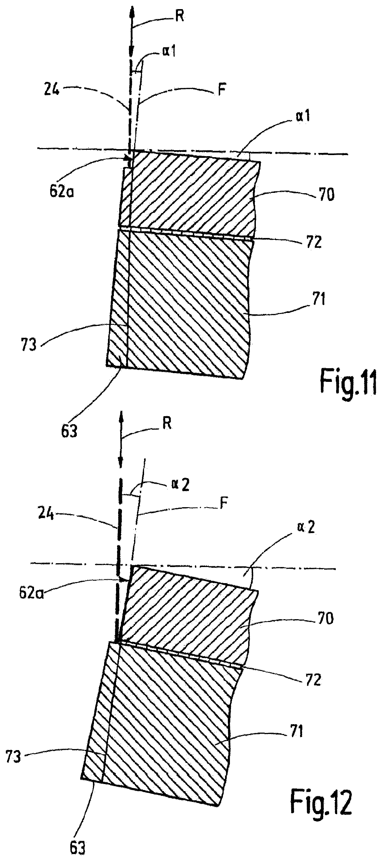

Beim Ausführungsbeispiel wird die Intensität I auf den zweiten Intensitätswert IG geändert, wenn das Materialteil 63 im Bereich des Schneidelements 70 abgetragen wurde die Verbindungsschicht 72 erreicht ist. Zu diesem Zeitpunkt veranlasst die Steuereinrichtung 29 auch eine Veränderung des Neigungswinkels α vom ersten Neigungswinkel α1 zum zweiten Neigungswinkel a2, wobei der zweite Neigungswinkel α2 beispielsgemäß größer ist, als der erste Neigungswinkel α1. Beim Ausführungsbeispiel beträgt der zweite Neigungswinkel α2 für den Materialabtrag am Trägerelement 71 in etwa 10 bis 25° (Figur 12). Der Neigungswinkel α wird stets gegenüber dem herzustellenden Flächenabschnitt 62a, 62b gemessen. Beschreibt die herzustellende Fläche 62 einen abgewinkelten oder gekrümmten Verlauf, so verändert die Positioniereinrichtung 30 zur Beibehaltung des gewünschten Neigungswinkels α die Relativlage zwischen Laserkopf 19 und Rohling 27.

Die Erfindung betrifft ein Verfahren und eine Vorrichtung zur Laserbearbeitung eines Rohlings 27. Aus dem Rohling 27 soll insbesondere ein Schneidwerkzeug mit einer Schneidkante 60 und einer Freifläche 62 hergestellt werden. Von einem Laser werden Laserstrahlimpulse 24 erzeugt und über eine Ablenkeinrichtung 23 auf eine Oberfläche 26 des Rohlings 27 gerichtet. Ein Laserstrahlimpuls 24 trifft an einer Auftreffstelle 25 unter einem Neigungswinkel α zwischen der Abstrahlrichtung R des Laserstrahlimpulses 24 und der am Rohling 27 zu erzeugenden Fläche 62 auf die Oberfläche 26 des Rohlings 27. Der Neigungswinkel α kann über eine Positioniereinrichtung 30 vor und während des Materialabtrags verändert und an sich ändernde Arbeitsbedingungen oder Arbeitsparameter angepasst werden. Die Ablenkeinrichtung 23 wird dabei so gesteuert, dass die Laserstrahlimpulse 24 an nebeneinander liegenden Auftreffstellen 25 auftreffen. Eine vorgegebene Anzahl von Auftreffstellen 25 bildet eine Pulsfläche 55. Auf jede Auftreffstelle 25 der Pulsfläche 55 werden Laserstrahlimpulse 24 in einer vorgegebenen Reihenfolge wiederholt gerichtet. Über eine Positioniereinrichtung 30 wird eine Relativbewegung mit konstanter Geschwindigkeit zwischen der Pulsfläche 55 und dem Rohling 27 hervorgerufen, so dass die durch die vorgegebenen Auftreffstellen 25 gebildete Pulsfläche 55 entlang der Oberfläche 26 des Rohlings 27 bewegt und bei jedem Konturdurchgang eine Abtragsschicht entfernt. Der im Bereich der Pulsfläche 55 erzeugte Materialabtrag bewegt sich somit kontinuierlich entlang der Oberfläche 26. Auf diese Weise können sehr exakte Kanten- und Flächenverläufe in oder an dem Rohling 27 bei gleichzeitig hohen Abtragsraten erzeugt werden.

### Bezugszeichenliste:

- 18: Werkstückhalterung
- 19: Laserkopf
- 20: Laserbearbeitungsmaschine
- 21: gepulster Laser
- 22: gepulster Laserstrahl
- 23: Ablenkeinrichtung
- 24: Laserstrahlimpuls
- 25: Auftreffstelle
- 26: Oberfläche v. 27
- 27: Rohling
- 28: Fokussieroptik
- 29: Steuereinrichtung
- 30: Positioniereinrichtung
- 31: erster Verstellantrieb
- 32: erste Richtung
- 33: erster Schlitten
- 34: erster Schlittenträger
- 35: zweiter Schlittenträger
- 36: zweiter Schlitten
- 37: zweite Richtung
- 38: dritte Richtung
- 39: dritter Schlitten
- 40: dritter Schlittenträger
- 41: Schwenkantrieb
- 42a: erste Schwenkachse
- 42b: zweite Schwenkachse

- 45: Prozessgaszufuhr
- 46: Prozessgasabsaugung
- 47: Aufnahmebereich
- 48: Vakuumkammer
- 49: Absaugleitung
- 50: Vakuumpumpe
- 51: Eintrittsstelle

- 55: Pulsfläche
- 56: Krater
- 57: Bahnendabschnitt
- 60: Schneidkante
- 61: Spanfläche
- 62: Freifläche
- 62a: erster Flächenabschnitt
- 62b: zweiter Flächenabschnitt
- 63: Materialteil
- 64: Restteil
- 65: Impulsfolge

- 70: Schneidelement
- 71: Trägerelement
- 72: Verbindungsschicht
- 73: Linie

- α: Neigungswinkel
- A: Abstand
- B: Pulsbahn
- D: Durchmesser
- dS: Schichtdicke
- E: Endpunkt
- f: Impulsfrequenz
- F: Ebene
- I: Intensität
- Ki: Konturdurchgang (i=l bis n)
- P: Prozessgasstrom
- R: Abstrahlrichtung
- S: Startpunkt
- V: Relativbewegungsrichtung
- vrel: Relativgeschwindigkeit

## Patentansprüche

1. Verfahren zur Herstellung wenigstens einer Schneidkante (60), die von einer Spanfläche (61) und einer Freifläche (62) begrenzt wird, bei dem ein Rohling (27) zur Herstellung eines Schneidwerkzeugs bereitgestellt wird, unter Verwendung einer Laserbearbeitungsvorrichtung, mit einem Laser (21), der Laserstrahlimpulse (22, 24) erzeugt, mit einem Laserkopf (19), der eine Ablenkeinrichtung (23) mit einer Fokussieroptik (28) aufweist, mit einer Positioniereinrichtung (30), die dazu eingerichtet ist, eine Relativbewegung zwischen einer den Rohling (27) haltenden Werkstückhalterung (18) und dem Laserkopf (19) zu veranlassen, und mit einer Steuereinrichtung (29), die die Positioniereinrichtung (30) zur Einstellung und Veränderung einer Relativposition zwischen dem Laserkopf (19) und dem Rohling (27) ansteuert und die den Laserkopf (19) zur Einstellung und Veränderung von Bearbeitungsparametern vor oder während der Bearbeitung des Rohlings (27) ansteuert, **gekennzeichnet durch** die folgenden Schritte:
- Erzeugen von Laserstrahlimpulsen (22, 24) und wiederholtes Richten der Laserstrahlimpulse (24) auf voneinander beabstandete, vorgegebene Auftreffstellen (25) entlang einer Pulsbahn (B) in einer fest vorgegebenen Reihenfolge innerhalb einer vorgegebenen zweidimensionalen Pulsfläche (55) auf dem Rohling (27) mittels der Ablenkeinrichtung (23),
- Ausführen einer Relativbewegung zwischen der den Rohling (27) haltenden Werkstückhalterung (18) und dem Laserkopf (19), wobei die Relativbewegung in einer Relativbewegungsrichtung (V) entlang der herzustellenden Fläche (62) und Schneidkante (60) verläuft und sich die Pulsfläche (55) mit der durch die Positionseinrichtung (30) für die Relativbewegung vorgegebenen Relativgeschwindigkeit (vrel) stillstandslos auf der Oberfläche des Rohlings (27) entlangbewegt,
wobei das die zu erzeugende Schneidkante (60) und Fläche (62) bedeckende, abzutragende Materialteil (63) des Rohlings (27) schichtweise in mehreren im Wesentlichen parallel zur Pulsfläche (55) verlaufenden Abtragsschichten, die sich quer zu der im Rohling (27) herzustellenden Fläche (62) erstrecken, derart entfernt wird, dass bei jeder vollständigen Bewegung der Pulsfläche (55) in Relativbewegungsrichtung (V) entlang der herzustellenden Schneidkante (60) und/oder Fläche (62) eine Abtragsschicht abgetragen wird.

2. Verfahren nach Anspruch 1,
**dadurch gekennzeichnet, dass** die Positioniereinrichtung (30) einen Neigungswinkel (a) zwischen der Abstrahlrichtung (R) der Lasterstrahlimpulse (24) und einer am Rohling (27) herzustellende Fläche (62) vorgibt und einstellt.

3. Verfahren nach Anspruch 2,
**dadurch gekennzeichnet, dass** die Positioniereinrichtung (30) den Neigungswinkel (a) während der Bearbeitung des Rohlings (27) verändert.

4. Verfahren nach Anspruch 2,
**dadurch gekennzeichnet, dass** der Rohling (27) eine Schneidstoffschicht (70) aufweist, die auf einer Trägerschicht (71) angeordnet ist und sich der abzutragende Materialteil (63) über beide Schichten (70, 71) erstreckt, wobei die Positioniereinrichtung (30) für das Abtragen des Materials der Schneidstoffschicht (70) einen ersten Neigungswinkel (α1) und für das Abtragen des Materials der Trägerschicht (71) einen zweiten Neigungswinkel (α2) einstellt.

5. Verfahren nach Anspruch 4,
**dadurch gekennzeichnet, dass** die Intensität (I) der Laserimpulse (24) während des Abtragens des Materials der Schneidstoffschicht (70) verschieden ist von der Intensität (I) während des Abtragens des Materials der Trägerschicht (71).

6. Verfahren nach Anspruch 4,
**dadurch gekennzeichnet, dass** die Schneidstoffschicht als Schneidelement (70) und die Trägerschicht als Trägerelement (71) ausgeführt sind, die unlösbar miteinander verbunden sind.

7. Verfahren nach Anspruch 2,
**dadurch gekennzeichnet, dass** der Betrag des Neigungswinkel (a) im Bereich von 0° bis 45°, insbesondere im Bereich von 5° bis 25° liegt.

8. Verfahren nach Anspruch 1,
**dadurch gekennzeichnet, dass** die Pulsbahn (B) einen Startpunkt (S) und einen Endpunkt (E) aufweist, wobei die den Endpunkt (E) markierende Auftreffstelle (25) an dem Rand der Pulsfläche (55) angeordnet ist, der der herzustellenden Kante (60) und/oder Fläche (62) zugeordnet ist.

9. Verfahren nach Anspruch 1,
**dadurch gekennzeichnet, dass** der Abstand (A) zwischen zwei aufeinanderfolgenden Auftreffstellen (25) entlang der Pulsbahn (B) durch die Impulsfrequenz (f) des Lasers (21) und die Verstellgeschwindigkeit der Ablenkeinrichtung (23) vorgegeben ist.

10. Verfahren nach Anspruch 1,
**dadurch gekennzeichnet, dass** die Ablenkeinrichtung (23) zwei unmittelbar aufeinanderfolgende Laserstrahlimpulse (24) auf verschiedene Auftreffstellen (25) der Pulsfläche (55) richtet.

11. Verfahren nach Anspruch 1,
**dadurch gekennzeichnet, dass** die Ablenkeinrichtung (23) zwei unmittelbar aufeinanderfolgende Impulsfolgen (65) mit mindestens zwei Laserstrahlimpulsen (24) auf verschiedene Auftreffstellen (25) der Pulsfläche (55) richtet.

12. Laserbearbeitungsvorrichtung zur Herstellung wenigstens einer Schneidkante (60) an einem Rohling (27), die von einer Spanfläche (61) und einer Freifläche (62) begrenzt wird,
mit einem Laser (21), der Laserstrahlimpulse (22, 24) erzeugt,
mit einem Laserkopf (19), der eine Ablenkeinrichtung (23) mit einer Fokussieroptik (28) aufweist,
mit einer Positioniereinrichtung (30), die dazu eingerichtet ist, eine Relativbewegung zwischen einer den Rohling (27) haltenden Werkstückhalterung (18) und dem Laserkopf (19) zu veranlassen,
mit einer Steuereinrichtung (29), die die Positioniereinrichtung (30) zur Einstellung und Veränderung einer Relativposition zwischen dem Laserkopf (19) und dem Rohling (27) ansteuert und die den Laserkopf (19) zur Einstellung und Veränderung von Bearbeitungsparametern vor oder während der Bearbeitung des Rohlings (27) ansteuert, **dadurch gekennzeichnet, dass** die Steuereinrichtung (29) dazu eingerichtet ist, folgendes Verfahren auszuführen:
- Erzeugen von Laserstrahlimpulsen (22, 24) und wiederholtes Richten der Laserstrahlimpulse (24) auf voneinander beabstandete, vorgegebene Auftreffstellen (25) entlang einer Pulsbahn (B) in einer fest vorgegebenen Reihenfolge innerhalb einer vorgegebenen zweidimensionalen Pulsfläche (55) auf einem Rohling (27) mittels der Ablenkeinrichtung (23),
- Ausführen einer Relativbewegung zwischen der den Rohling (27) haltenden Werkstückhalterung (18) und dem Laserkopf (19), wobei die Relativbewegung in einer Relativbewegungsrichtung (V) entlang der herzustellenden Fläche (62) und Schneidkante (60) verläuft und sich die Pulsfläche (55) mit der durch die Positionseinrichtung (30) für die Relativbewegung vorgegebenen Relativgeschwindigkeit (vrel) stillstandslos auf der Oberfläche des Rohlings (27) entlangbewegt,
wobei das die zu erzeugende Schneidkante (60) und Fläche (62) bedeckende, abzutragende Materialteil (63) des Rohlings (27) schichtweise in mehreren im Wesentlichen parallel zur Pulsfläche (55) verlaufenden Abtragsschichten, die sich quer zu der im Rohling (27) herzustellenden Fläche (62) erstrecken, derart entfernt wird, dass bei jeder vollständigen Bewegung der Pulsfläche (55) in Relativbewegungsrichtung (V) entlang der herzustellenden Schneidkante (60) und/oder Fläche (62) eine Abtragsschicht abgetragen wird.

## Claims

1. Method for the production of at least one cutting edge (60) which is delimited by a rake face (61) and a flank face (62), in which a blank (27) is provided for production of a cutting tool, by use of a laser processing device with a laser which produces laser beam impulses (22, 24), with a laser head (19) which has a deflection device (23) with focusing optics (28), with a positioning device (30) which is configured to cause a relative movement between a workpiece holder (18) holding the blank (27) and the laser head (19), and with a control device (29) which controls the positioning device (30) for adjusting and changing a relative position between the laser head (19) and the blank (27) and controls the laser head (19) for adjusting and changing machining parameters before or during machining of the blank (27), **characterized by** the following steps:
- producing laser beam impulses (22, 24) and repeated directing the laser beam impulses (24) onto predefined and mutually spaced impingement sites (25) along a pulse track (B) in a predetermined order within a predefined two-dimensional pulse surface (55) on the blank (27) by means of the deflection device (23),
- performing a relative movement between the workpiece holder (18) holding the blank (27) and the laser head (19), wherein the relative movement extends in a relative movement direction (V) along the surface (62) and cutting edge (60) to be produced and the pulse surface (55) moves without stopping along the surface of the blank (27) with the relative speed (vrel) predefined by the positioning device (30) for the relative movement,
wherein the material part (63) of the blank (27) covering the cutting edge (60) and surface (62) to be produced is removed in layers, in several removal layers extending substantially parallel to the pulse surface (55) and extending transversely to the surface (62) to be produced in the blank (27), such that a removal layer is removed on each complete movement of the pulse surface (55) in the relative movement direction (V) along the cutting edge (60) and/or surface (62) to be produced.

2. Method according to claim 1, **characterized in that** the positioning device (30) predefines and adjusts an inclination angle (α) between the emission direction (R) of the laser beam impulses (24) and a surface (62) to be produced on the blank (27).

3. Method according to claim 2, **characterized in that** the positioning device (30) changes the inclination angle (α) during machining of the blank (27).

4. Method according to claim 2, **characterized in that** the blank (27) has a cutting substance layer (70) arranged on a carrier layer (71), and the material part (63) to be removed extends over both layers (70, 71), wherein the positioning device (30) adjusts a first inclination angle (α1) for removal of the material of the cutting substance layer (70) and a second inclination angle (α2) for removal of the material of the carrier layer (71).

5. Method according to claim 4, **characterized in that** the intensity (I) of the laser impulses (24) during removal of the material of the cutting substance layer (70) differs from the intensity (I) during removal of the material of the carrier layer (71).

6. Method according to claim 4, **characterized in that** the cutting substance layer is configured as a cutting element (70) and the carrier layer is configured as a carrier element (71) which are non-releasably connected together.

7. Method according to claim 2, **characterized in that** the amount of the inclination angle (α) is in the range from 0° to 45°, in particular in the range from 5° to 25°.

8. Method according to claim 1, **characterized in that** the pulse track (B) has a starting point (S) and an end point (E), wherein the impingement site (25) marking the end point (E) is arranged at the edge of the pulse surface (55) assigned to the edge (60) and/or surface (62) to be produced.

9. Method according to claim 1, **characterized in that** the distance (A) between two successive impingement sites (25) along the pulse track (B) is predefined by the impulse frequency (f) of the laser (21) and the adjustment speed of the deflection device (23).

10. Method according to claim 1, **characterized in that** the deflection device (23) directs two directly successive laser beam impulses (24) onto different impingement sites (25) of the pulse surface (55).

11. Method according to claim 1, **characterized in that** the deflection device (23) directs two directly successive impulse sequences (65) with at least two laser beam impulses (24) onto different impingement sites (25) of the pulse surface (55).

12. Laser processing device for production of at least one cutting edge (60) on a blank (27), the cutting edge (60) being delimited by a rake face (61) and a flank face (62),
with a laser (21) which generates laser beam impulses (22, 24),
with a laser head (19) which has a deflection device (23) with focusing optics (28),
with a positioning device (30) which is configured to cause a relative movement between a workpiece holder (18) holding the blank (27) and the laser head (19),
with a control device (29) which controls the positioning device (30) for adjusting and changing a relative position between the laser head (19) and the blank (27) and controls the laser head (19) for adjusting and changing machining parameters before or during machining of the blank (27),
**characterized in that** the control device (29) is configured to execute the following method:
- producing laser beam impulses (22, 24) and repeated directing the laser beam impulses (24) onto predefined and mutually spaced impingement sites (25) along a pulse track (B) within a predefined two-dimensional pulse surface (55) on a blank (27) by means of the deflection device (23),
- performing a relative movement between the workpiece holder (18) holding the blank (27) and the laser head (19), wherein the relative movement extends in a relative movement direction (V) along the surface (62) and cutting edge (60) to be produced, and the pulse surface (55) moves without stopping along the surface of the blank (27) with the relative speed (vrel) predefined by the positioning device (30) for the relative movement,
wherein the material part (63) of the blank (27) to be removed and covering the cutting edge (60) and surface (62) to be produced is removed in layers, in several removal layers extending substantially parallel to the pulse surface (55) and extending transversely to the surface (62) to be produced in the blank (27), such that a removal layer is removed on each complete movement of the pulse surface (55) in the relative movement direction (V) along the cutting edge (60) and/or surface (62) to be produced.

## Revendications

1. Procédé de fabrication d'au moins une arête de coupe (60) qui est délimitée par une face de coupe (61) et une face de dépouille (62), selon lequel une ébauche (27) est mise en place en vue de la fabrication d'un outil de coupe, en utilisant un dispositif d'usinage au laser comprenant un laser (21) qui génère des impulsions de faisceau laser (22, 24), comprenant une tête laser (19) qui présente un dispositif de déviation (23), comprenant un système optique de focalisation (28), comprenant un dispositif de positionnement (30) qui est conçu pour déclencher un mouvement relatif entre un porte-pièce (18), portant l'ébauche (27), et la tête laser (19), et comprenant un dispositif de commande (29) qui active le dispositif de positionnement (30) en vue du réglage et de la modification d'une position relative entre la tête laser (19) et l'ébauche (27), et qui active la tête laser (19), avant ou pendant l'usinage de l'ébauche (27), en vue du réglage et de la modification de paramètres d'usinage, avant ou pendant l'usinage de l'ébauche (27), **caractérisé en ce qu'**il comprend les étapes suivantes :
- génération d'impulsions de faisceau laser (22, 24) et orientation répétée des impulsions de faisceau laser (24) sur des points d'incidence (25) prédéterminés, espacés les uns des autres, le long d'une trajectoire des impulsions (B), dans un ordre prédéfini de manière fixe, à l'intérieur d'une surface d'impulsions (55) prédéterminée en deux dimensions sur l'ébauche (27), au moyen du dispositif de déviation (23),
- exécution d'un mouvement relatif entre le porte-pièce (18), portant l'ébauche (27), et la tête laser (19), le mouvement relatif s'effectuant dans une direction de mouvement relatif (V) le long de la surface (62) et de l'arête de coupe (60) devant être réalisées, et la surface d'impulsions (55) se déplaçant sans s'arrêter sur la surface de l'ébauche (27), avec la vitesse relative (vrel) prédéfinie par le dispositif de positionnement (30) pour le mouvement relatif,
sachant que la partie de matière (63) de l'ébauche (27) qui recouvre l'arête de coupe (60) et la surface (62) à réaliser et qui doit être enlevée est retirée par couches en plusieurs couches d'enlèvement qui s'étendent sensiblement parallèlement à la surface d'impulsions (55) et perpendiculairement à la surface (62) devant être réalisée dans l'ébauche (27), de telle sorte qu'une couche d'enlèvement est retirée lors de chaque mouvement complet de la surface d'impulsions (55) dans la direction de mouvement relatif (V), le long de l'arête de coupe (60) et/ou de la surface (62) devant être réalisées.

2. Procédé selon la revendication 1, **caractérisé en ce que** le dispositif de positionnement (30) prédéfinit et règle un angle d'inclinaison (a) entre la direction d'émission (R) des impulsions de faisceau laser (24) et une surface (62) devant être réalisée sur l'ébauche (27).

3. Procédé selon la revendication 2, **caractérisé en ce que** le dispositif de positionnement (30) modifie l'angle d'inclinaison (a) au cours de l'usinage de l'ébauche (27).

4. Procédé selon la revendication 2, **caractérisé en ce que** l'ébauche (27) présente une couche de matériau de coupe (70) qui est disposée sur une couche support (71), et que la partie de matière (63) devant être enlevée s'étend sur les deux couches (70, 71), le dispositif de positionnement (30) réglant un premier angle d'inclinaison (α1) pour l'enlèvement de la matière de la couche de matériau de coupe (70) et un deuxième angle d'inclinaison (α2) pour l'enlèvement de la matière de la couche support (71).

5. Procédé selon la revendication 4, **caractérisé en ce que** pendant l'enlèvement de la matière de la couche de matériau de coupe (70), l'intensité (I) des impulsions laser (24) est différente de l'intensité (I) pendant l'enlèvement de la matière de la couche support (71).

6. Procédé selon la revendication 4, **caractérisé en ce que** la couche de matériau de coupe est réalisée comme élément de coupe (70) et la couche support est réalisée comme élément support (71), qui sont liés l'un à l'autre de manière inséparable.

7. Procédé selon la revendication 2, **caractérisé en ce que** la valeur de l'angle d'inclinaison (a) est comprise dans la plage allant de 0° à 45°, en particulier dans la plage allant de 5° à 25°.

8. Procédé selon la revendication 1, **caractérisé en ce que** la trajectoire des impulsions (B) présente un point de début (S) et un point de fin (E), sachant que le point d'incidence (25) qui marque le point de fin (E) est disposé sur le bord de la surface d'impulsions (55) qui est associé à l'arête (60) et/ou à la surface (62) devant être réalisées.

9. Procédé selon la revendication 1, **caractérisé en ce que** la distance (A) entre deux points d'incidence (25) successifs le long de la trajectoire des impulsions (B) est prédéterminée par la fréquence des impulsions (f) du laser (21) et la vitesse de déplacement du dispositif de déviation (23).

10. Procédé selon la revendication 1, **caractérisé en ce que** le dispositif de déviation (23) oriente deux impulsions de faisceau laser (24) qui se suivent directement, sur des points d'incidence (25) différents de la surface d'impulsions (55).

11. Procédé selon la revendication 1, **caractérisé en ce que** le dispositif de déviation (23) oriente deux trains d'impulsions (65) qui se suivent directement et comportent au moins deux impulsions de faisceau laser (24), sur des points d'incidence (25) différents de la surface d'impulsions (55).

12. Dispositif d'usinage au laser destiné à réaliser au moins une arête de coupe (60) sur une ébauche (27), qui est délimitée par une face de coupe (61) et une face de dépouille (62),
comprenant un laser (21) qui génère des impulsions de faisceau laser (22, 24),
comprenant une tête laser (19) qui présente un dispositif de déviation (23) doté d'un système optique de focalisation (28),
comprenant un dispositif de positionnement (30) qui est conçu pour déclencher un mouvement relatif entre un porte-pièce (18), portant l'ébauche (27), et la tête laser (19),
comprenant un dispositif de commande (29) qui active le dispositif de positionnement (30) en vue du réglage et de la modification d'une position relative entre la tête laser (19) et l'ébauche (27), et qui active la tête laser (19), avant ou pendant l'usinage de l'ébauche (27), en vue du réglage et de la modification de paramètres d'usinage,
**caractérisé en ce que** le dispositif de commande (29) est conçu pour mettre en œuvre le procédé suivant :
- génération d'impulsions de faisceau laser (22, 24) et orientation répétée des impulsions de faisceau laser (24) sur des points d'incidence (25) prédéterminés, espacés les uns des autres, le long d'une trajectoire des impulsions (B), dans un ordre prédéfini de manière fixe, à l'intérieur d'une surface d'impulsions (55) prédéterminée en deux dimensions sur une ébauche (27), au moyen du dispositif de déviation (23),
- exécution d'un mouvement relatif entre le porte-pièce (18), portant l'ébauche (27), et la tête laser (19), le mouvement relatif s'effectuant dans une direction de mouvement relatif (V) le long de la surface (62) et de l'arête de coupe (60) devant être réalisées, et la surface d'impulsions (55) se déplaçant sans s'arrêter sur la surface de l'ébauche (27), avec la vitesse relative (vrel) prédéfinie par le dispositif de positionnement (30) pour le mouvement relatif,
sachant que la partie de matière (63) de l'ébauche (27) qui recouvre l'arête de coupe (60) et la surface (62) à réaliser et qui doit être enlevée est retirée par couches en plusieurs couches d'enlèvement qui s'étendent sensiblement parallèlement à la surface d'impulsions (55) et perpendiculairement à la surface (62) devant être réalisée dans l'ébauche (27), de telle sorte qu'une couche d'enlèvement est retirée lors de chaque mouvement complet de la surface d'impulsions (55) dans la direction de mouvement relatif (V), le long de l'arête de coupe (60) et/ou de la surface (62) devant être réalisées.
